# EUROPEAN PATENT SPECIFICATION

(11) **EP 2 814 079 B1**
(45) Date of publication and mention of the grant of the patent: **18.05.2016**
(21) Application number: 14171808.0
(22) Date of filing: 10.06.2014
(51) Int. Cl.: H01M 2/00, H01M 2/10

(54) **Sealed battery**
Abgedichtete Batterie
Batterie étanche

(30) Priority: 11.06.2013 JP 2013122742
(43) Date of publication of application: 17.12.2014
(73) Proprietor: GS Yuasa International Ltd., Kisshoin, Minami-ku, Kyoto-shi, Kyoto 601-8520 (JP)
(72) Inventor: TATSUMI, Yoshio, Kyoto, 601-8520 (JP)
(74) Representative: Isarpatent

(56) References cited:
- JP-A- H11 283 587
- JP-A- 2003 142 041
- JP-A- 2013 058 355
- US-A- 4 724 190

## Description

### Field

The present invention relates to a sealed battery.

### Background

Conventionally, as a lead-acid battery which is a sealed battery, there is a battery including a container partitioned into a plurality of cell chambers with container partitions, electrode groups housed in the respective cell chambers, and a lid having lid partitions welded to the container partitions by heat sealing as shown in JP-A-11-283587. A protruding portion protruding to be higher than upper ends of container side walls is formed at each of the container partitions, and an intercell connecting portion is disposed at the protruding portion. In JP-A-11-283587, a protruding portion is also formed at a portion sandwiched between straps of opposite polarities, which are not connected to each other due to the container partition interposed therebetween.

In the thus configured sealed battery, each of the container partitions is pressed by the electrode group and bulges and curves from one cell chamber toward the other cell chamber. In this case, if the container partitions and the lid partitions are welded to each other by heat sealing, positions of the container partitions with respect to the lid partitions are displaced and welding by heat sealing between the container partitions and the lid partitions becomes insufficient, which causes airtight sealing failure.

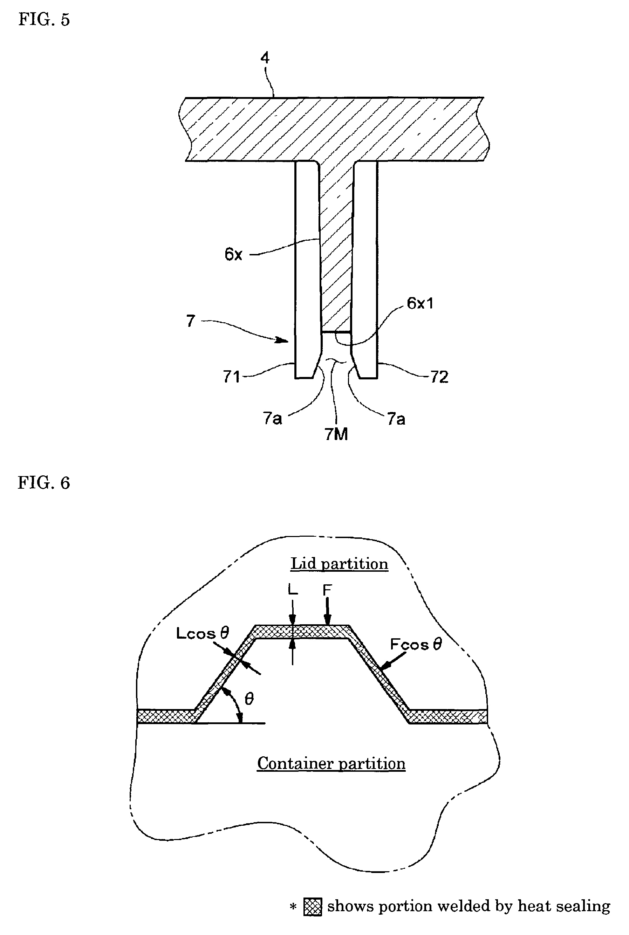

Especially, as shown in Fig. 6, at each of welded portions between inclined portions of the protruding portion formed at the container partition and inclined portions of a recessed portion formed at the lid partition, a pressing load applied perpendicularly to the inclined portion is Fcosθ, if an inclination angle of the inclined portion from a horizontal direction is θ, and the pressing load applied perpendicularly to the inclined portion becomes small. Further, if a fusion margin of horizontal portions is L, a fusion margin perpendicular to the inclined portions is Lcosθ. Therefore, at the inclined portions, as compared with the horizontal portions, strength of the welded portion is lower, welding by heat sealing of the inclined portions is likely to be insufficient, and the sealing failure is likely to occur. In this state, if positional displacement of the container partition with respect to the lid partition occurs as described above, welding by heat sealing at the inclined portions becomes further insufficient and the sealing failure is more likely to occur.

On the other hand, as shown in JP-A-2003-142041, there is a sealed battery including container partitions having straight upper ends and lid partitions having straight lower ends, wherein guide ribs are provided to the lid partitions and the guide ribs align positions of the container partitions with the lid partitions to thereby secure welding by heat sealing of the container partitions and the lid partitions to each other to suppress sealing failure.

### Summary

In the lead-acid battery described in JP-A-11-283587 mentioned above, guide ribs may be provided to the horizontal portions of the lid partitions to align the positions of the container partitions with the lid partitions to thereby carry out positioning of the protruding portions of the container partitions and the recessed portions of the lid partitions with respect to each other.

However, because separators in the electrode groups extend to be higher than electrode plates so that the electrode plates do not extend to cause a short circuit, the guide ribs provided to the horizontal portions of the lid partitions come in contact with and push down the extending portions of the separators and the short circuit is likely to occur. The higher the electrode plates become in order to increase battery capacities, the more conspicuous this problem becomes.

The present invention has been made to solve the above problems and its main object is to reliably join inclined portions formed at container partitions and inclined portions formed at lid partitions to each other while enhancing battery performance and without forming structures causing a short circuit.

A sealed battery according to an aspect of the present invention includes a container, which is surrounded with container side walls and partitioned into a plurality of cell chambers with a container partition and in which an electrode group including a separator is housed in each of the cell chambers, and a lid including a lid partition to be joined to the container partition, wherein the container partition includes a container-inclined portion diagonally inclined at a higher position than upper ends of the container side walls, the lid partition includes a lid-inclined portion diagonally inclined to conform to the container-inclined portion, and a guide portion for aligning a position of the container-inclined portion with the lid-inclined portion is provided to the lid-inclined portion.

### Brief Description of the Drawings

Fig. 1 depicts a perspective view showing a container of a present embodiment;
Fig. 2 depicts a perspective view showing a lid of the present embodiment;
Fig. 3 depicts a partial sectional view of a battery of the present embodiment;
Fig. 4 depicts a partial sectional view of the container and the lid separated from each other in the present embodiment;
Fig. 5 depicts a partial enlarged sectional view of a guide portion of the present embodiment; and
Fig. 6 depicts a diagram schematically showing welding by heat sealing of a conventional container partition and a lid partition.

### Description of Embodiments

A sealed battery according to an aspect of the present invention includes a container, which is surrounded with container side walls and partitioned into a plurality of cell chambers with a container partition and in which an electrode group including a separator is housed in each of the cell chambers, and a lid including a lid partition to be joined to the container partition, wherein the container partition includes a container-inclined portion diagonally inclined at a higher position than upper ends of the container side walls, the lid partition includes a lid-inclined portion diagonally inclined to conform to the container-inclined portion, and a guide portion for aligning a position of the container-inclined portion with the lid-inclined portion is provided to the lid-inclined portion.

With this sealed battery, because the guide portion for aligning the position of the container-inclined portion formed at the container partition with the lid-inclined portion is provided to the lid-inclined portion formed at the lid partition, it is possible to align the position of the container partition with the lid partition and especially the position of the container-inclined portion with the lid-inclined portion. Thus, it is possible to reliably join the container-inclined portion and the lid-inclined portion to each other and sealing failure between the container partition and the lid partition and especially sealing failure between the container-inclined portion and the lid-inclined portion can be remedied.

Further, because the guide portion is provided to the lid-inclined portion, interference between the guide portion and the separator, which can occur when the guide portion is provided to the horizontal portion other than the lid-inclined portion at the lid partition, is prevented. Thus, it is possible to prevent a short circuit which occurs when the separator is pushed down by the guide portion and it is possible to increase heights of the electrode groups to enhance battery performance.

Moreover, because the guide portion is provided to the lid-inclined portion, the guide portion does not protrude from lower ends of the lid side walls when seen in a side view and the guide portion can be prevented from coming in contact with outside objects and getting damaged before assembly.

The container partition may have a protruding portion protruding to be higher than the upper ends of the container side walls, the lid partition may have a recessed portion recessed to conform to the protruding portion, and an intercell connecting portion for connecting the electrode groups in the cell chambers adjacent to each other may be provided to the protruding portion.

With this configuration, the intercell connecting portion can be disposed on the lid side and it is possible to further increase the height dimensions of the electrode groups. Therefore, it is possible to further enhance the battery performance.

The container partition is deformed more greatly at a central portion than at both side portions. Preferably, the protruding portion includes side faces and the container-inclined portion is formed on one of the side faces that is located in vicinity of a center of the container partition, and the recessed portion is defined between side faces and the lid-inclined portion is formed on one of the side faces that is located in vicinity of a center of the lid partition.

With this configuration, because the container-inclined portion and the lid-inclined portion are disposed near the center of the respective partitions, it is possible to align a position of a portion of the container partition, which is to be deformed greatly, with the lid partition and, as a result, it is possible to align a position of the entire container partition with the lid partition. Accordingly, it is possible to reliably join not only the container-inclined portion and the lid-inclined portion to each other but also the entire container partition and the entire lid partition to each other.

As a specific aspect of the guide portion, the guide portion may have a pair of guide ribs protruding downward from opposite sides of the lid-inclined portion and the pair of guide ribs have guide faces inclined such that a clearance between the guide ribs gradually widens toward tip ends of the guide ribs.

With this configuration, the container-inclined portion which is in contact with the guide faces of the guide ribs is guided by the guide faces and an upper end face of the container-inclined portion is likely to come in contact with a lower end face of the lid-inclined portion.

The tip ends of the guide ribs are preferably at higher positions than the lower ends of lid side walls to be joined to the container side walls.

With this configuration, lower ends of the guide ribs do not protrude from the lower ends of the lid side walls and the guide ribs can be prevented from coming in contact with the outside objects and getting damaged before assembly.

It is preferable that electrode plates forming the electrode groups comprise cast grids.

Although thicknesses of expanded grids are not likely to vary, thicknesses of the cast grids are likely to vary. Therefore, if the electrode groups are formed by using the cast grids, thicknesses of the electrode groups vary, the container partition bulges when the electrode groups are housed in the cell chambers, and the problem to be solved by the invention is conspicuous. Therefore, in the sealed battery in which the electrode groups formed by using the cast grids are housed, the effect of the guide portion of the present invention becomes further pronounced.

The electrode groups are preferably pressed in a direction intersecting with the container side walls when the electrode groups are housed in the cell chambers.

If the electrode groups are housed in the cell chambers while pressed in the direction intersecting with the container side walls, the container partition is pressed by the electrode groups and bulges and curves. In such a structure, the effect of the guide portion of the present invention is further pronounced.

According to the aspects of the present invention described above, because the guide portion is provided to the lid-inclined portion and the position of the container-inclined portion is aligned with the lid-inclined portion, it is possible to reliably join the container-inclined portion and the lid-inclined portion to each other. Further, because the guide portion is provided to the lid-inclined portion, interference with the separator is prevented and it is possible to increase the heights of the electrode groups to thereby enhance the battery performance.

An embodiment of a sealed battery according to the present invention will be described below with reference to the drawings.

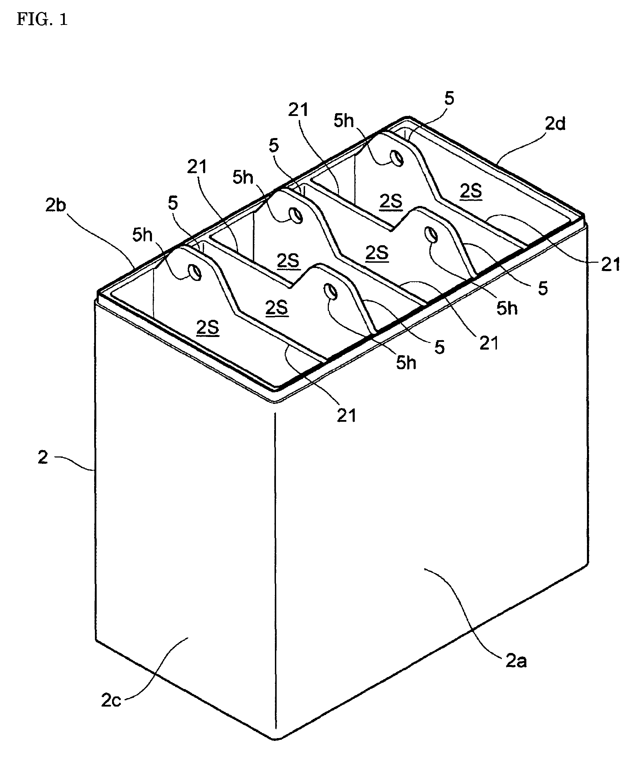

A sealed battery 100 in a present embodiment is a monoblock lead-acid battery used for an automobile, for example, and includes a container 2 an inside of which is partitioned into a plurality of (six in Fig. 1) cell chambers 2S with a plurality of (five in Fig. 1) container partitions 21, electrode groups 3 housed in the respective cell chambers 2S, and a lid 4 welded by heat sealing to side walls 2a to 2d and the plurality of container partitions 21 of the container 2 as shown in Figs. 1 to 3. Meanwhile, the container 2 and the lid 4 are made of a thermoplastic resin such as PP, ABS, PE, or the like.

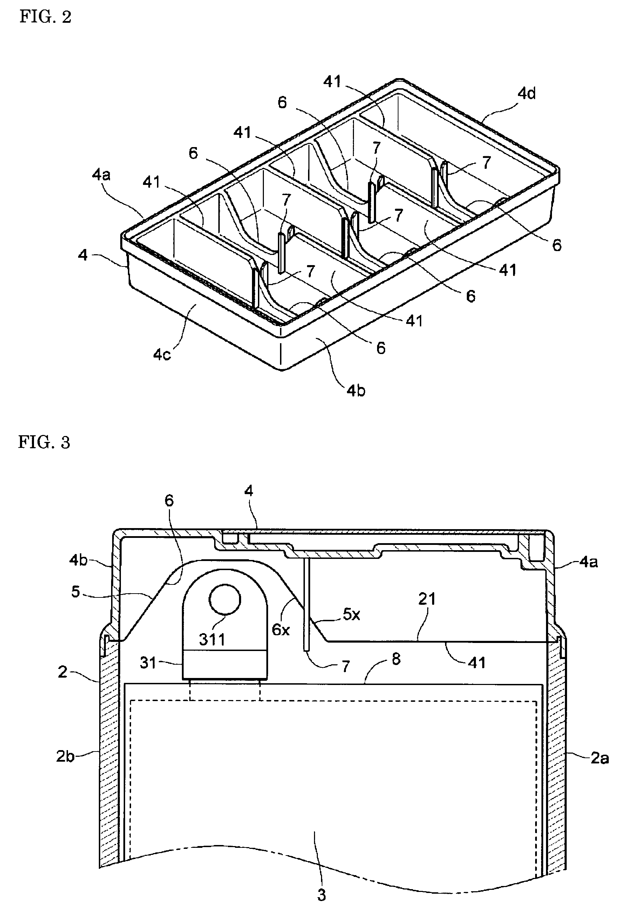

Each of the electrode groups 3 is formed by alternately layering a positive electrode plate, a negative electrode plate, and a separator 8. Electrode plate grids of the positive electrode plate and the negative electrode plate forming each of the electrode groups 3 are formed by using cast grids. Further, each of the electrode groups 3 is housed in the cell chamber 2S with a layered direction aligned with a direction orthogonal to the container partitions 21 and while pressed in the layered direction. Furthermore, each of the electrode groups 3 has plate straps 31 to each of which lugs of the electrode plates of the same polarity are connected (see Fig. 3). In the following description, the plate strap 31 to which the lugs of the positive electrode plates are connected will be referred to as a positive electrode strap and the plate strap 31 to which the lugs of the negative electrode plates are connected will be referred to as a negative electrode strap.

As especially shown in Fig. 2, the lid 4 has side walls 4a to 4d to be welded by heat sealing to the side walls 2a to 2d of the container 2 and a plurality of lid partitions 41 to be welded to the plurality of container partitions 21. Further, the lid 4 is provided with external terminals (not shown) to each of which a pole provided to the positive electrode strap or the negative electrode strap of the electrode group 3 housed in the cell chamber 2S at each end portion is connected. The lid 4 is provided with an electrolyte solution filling opening (not shown) for adding electrolyte solution into the respective cell chambers.

In the sealed battery 100 of the present embodiment, as shown especially in Figs. 1 and 3, each of the container partitions 21 has a protruding portion 5 protruding to be higher than upper ends of the container side walls 2a to 2d.

The protruding portion 5 is to be provided with an intercell connecting portion 311 for connecting the plate straps 31 of opposite polarities of the electrode groups 3 housed in the adjacent cell chambers 2S. The protruding portion 5 has a through hole 5h through which the intercell connecting portion 311 is to be provided (see Fig. 1).

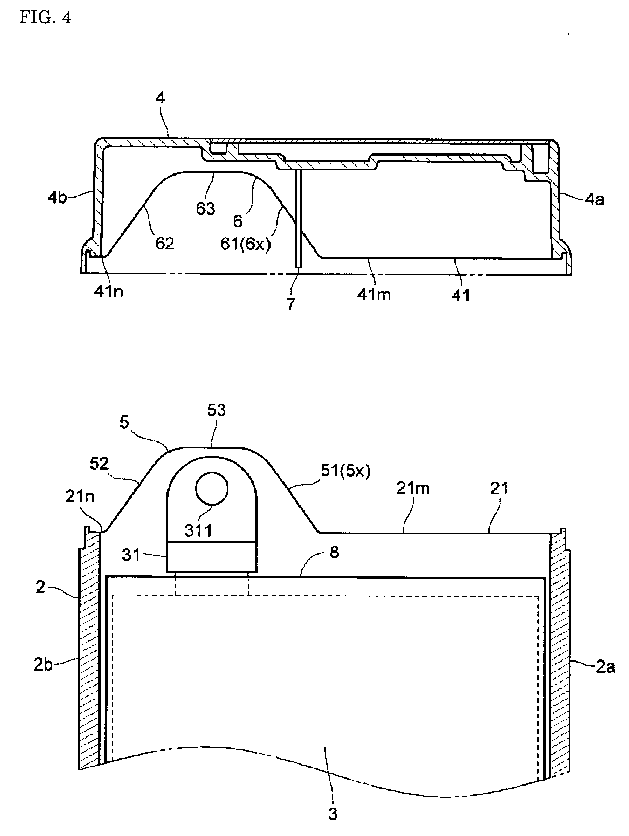

Specifically, as shown in Fig. 4, the protruding portion 5 is formed at the upper end of the container partition 21 and includes a first inclined portion 51 formed from a flat and horizontal upper end portion 21m connected to the upper end of the one container side wall 2a to be higher than the upper end of the container side wall 2a, a second inclined portion 52 formed from a flat and horizontal upper end portion 21n connected to the upper end of the other container side wall 2b to be higher than the upper end of the container side wall 2b, and a top side portion 53 formed between the first inclined portion 51 and the second inclined portion 52. The thus configured protruding portion 5 is provided at a position displaced from a center of the container partition 21 toward the one container side wall 2a or the other container side wall 2b (see Fig. 1). In Fig. 4, the protruding portion 5 provided at a position displaced toward the other container side wall 2b is shown.

The first inclined portion 51 has a substantially straight inclined side continuous with an upper side of the upper end portion 21m when seen in a direction orthogonal to a planar direction of the container partition 21 (in a plan view). Further, the second inclined portion 52 has a substantially straight inclined side continuous with an upper side of the upper end portion 21n in the plan view. Furthermore, the top side portion 53 has a substantially straight top side continuous with an upper end of the inclined side of the first inclined portion 51 and an upper end of the inclined side of the second inclined portion 52.

Further, each of the lid partitions 41 has a recessed portion 6 in a shape conforming to the protruding portion 5 of the container partition 21.

Specifically, as shown in Fig. 4, the recessed portion 6 is formed at a lower end of the lid partition 41 and includes a first inclined portion 61 formed from a flat and horizontal lower end portion 41m connected to the lower end of one lid side wall 4a to be higher than the lower end of the lid side wall 4a, a second inclined portion 62 formed from a flat and horizontal lower end portion 41n connected to a lower end of the other lid side wall 4b to be higher than the lower end of the lid side wall 4b, and a base portion 63 formed between the first inclined portion 61 and the second inclined portion 62. The thus formed recessed portion 6 is provided at a position displaced from a center of the lid partition 41 toward the one lid side wall 4a or the other lid side wall 4b similarly to the protruding portion 5 (see Fig. 2). In Fig. 4, the protruding portion 5 provided at the position displaced toward the other lid side wall 4b is shown.

The first inclined portion 61 has a substantially straight inclined side continuous with a lower side of the lower end portion 41m when seen in a direction orthogonal to a planar direction of the lid partition 41 (in a plan view). An inclination angle of the inclined side of the first inclined portion 61 with respect to a horizontal direction is the same as an inclination angle of the inclined side of the first inclined portion 51 with respect to the horizontal direction. Further, the second inclined portion 62 has a substantially straight inclined side continuous with a lower side of the lower end portion 41n in the plan view. An inclination angle of the inclined side of the second inclined portion 62 with respect to the horizontal direction is the same as an inclination angle of the inclined side of the second inclined portion 52 with respect to the horizontal direction. Furthermore, the base portion 63 has a substantially straight base continuous with a lower end of the inclined side of the first inclined portion 61 and a lower end of the inclined side of the second inclined portion 62.

In addition to the above structure, in the sealed battery 100 of the present embodiment, as shown in Figs. 2 to 4, a guide portion 7 for positioning the container partition 21 with respect to the lid partition 41 is provided to the lid partition 41. Specifically, the guide portion 7 for aligning positions of the inclined portions 51 and 52 of the container partition 21 with the inclined portions 61 and 62 of the lid partition 41 is provided to either one of the two inclined portions 61 and 62 of the recessed portion 6 formed at the lid partition 41.

As shown especially in Fig. 4, the guide portion 7 is provided to the inclined portion (the first inclined portion 61 in Fig. 4) positioned on a center side of the lid partition 41 out of the inclined portions 61 and 62 of the recessed portion 6. In the following description, the inclined portion 61 or 62 provided with the guide portion 7 will be referred to as a lid-inclined portion 6x. Further, the inclined portion 51 or 52 of the protruding portion 5 formed at the container partition 21 corresponding to the lid-inclined portion 6x will be referred to as a container-inclined portion 5x. The container-inclined portion 5x is the inclined portion 51 or 52 of the protruding portion 5 of the container partition 21 and positioned on a center side. Because the guide portion 7 is provided to the lid-inclined portion 6x of the recessed portion 6 formed at each of the lid partition 41 and positioned on the center side, each of the container partitions 21 is positioned with respect to each of the lid partitions 41 on the center side.

Specifically, as shown in Fig. 5, the guide portion 7 includes paired guide ribs 71 and 72 provided on opposite faces of the lid-inclined portion 6x and protruding downward from the lid-inclined portion 6x. The paired guide ribs 71 and 72 are symmetric about the lid-inclined portion 6x. Further, the respective guide ribs 71 and 72 have guide faces 7a inclined to be away from the lid-inclined portion 6x and a clearance between them widens as they extend away from a lower end face 6x1 of the lid-inclined portion 6x. By forming the guide ribs 71 and 72, the guide portion 7 as a whole includes a guide groove 7M which widens as it extends away from the lower end face 6x1 of the lid-inclined portion 6x. Protruding lengths of the guide ribs 71 and 72 from the lower end face 6x1 of the lid-inclined portion 6x are set such that lower ends of the guide ribs 71 and 72 are at higher positions than the lower ends of the lid side walls 4a and 4b (see especially Fig. 4). In other words, when the lid 4 before assembly is placed on a flat face, the lower ends of the guide ribs 71 and 72 do not come in contact with the flat face. Thus, the guide ribs 71 and 72 are protected from outside objects by the lid side walls 4a and 4b and are prevented from coming in contact with the outside objects and getting damaged.

### <Effects of the Embodiment>

According to the lead-acid battery 100 of the present embodiment and configured as described above, because the guide portion 7 is provided to the lid-inclined portion 6x and the guide portion 7 for aligning the position of the container-inclined portion 5x formed at the container partition 21 with the lid-inclined portion 6x is provided, it is possible to align the position of the container partition 21 with the lid partition 41 and especially the position of the first inclined portion 5x with the second inclined portion 6x. Thus, it is possible to reliably carry out welding of the first inclined portion 5x and the second inclined portion 6x to each other by heat sealing. Sealing failure between the container partition 21 and the lid partition 41 and especially sealing failure between the first inclined portion 5x and the second inclined portion 6x can be remedied.

Further, because the guide portion 7 is provided to the second inclined portion 6x formed at the lid partition 41, interference between the guide portion 7 and the separator 8, which can occur when the guide portion 7 is provided to the horizontal portion 4m or 4n other than the second inclined portion 6x, is prevented. Thus, it is possible to prevent a short circuit which occurs when the separator 8 is pushed down by the guide portion 7 and it is possible to increase heights of the electrode groups 3 to enhance battery performance. Furthermore, as a structure for preventing the interference between the guide portion 7 and the separator 8, the guide portion 7 may be provided to the base portion 63 of the recessed portion 6. However, a height of the base portion 63 is short as compared with the upper wall of the lid 4 and therefore the guide portion 7 is difficult to provide and sufficient mechanical strength of the guide portion 7 may not be obtained.

Moreover, the intercell connecting portion 311 is provided to the protruding portion 5. Thus, the intercell connecting portion 311 can be disposed on a side of the lid 4 and it is possible to further increase the height dimensions of the electrode groups 3 to thereby further enhance the battery performance. Furthermore, because the guide portion 7 is provided to the inclined portion positioned on the center side of the lid partition 41 out of the two inclined portions 61 and 62 of the recessed portion 6, it is possible to align a position of a portion of the container partition 21, which is to be deformed greatly, with the lid partition 41. As a result, it is possible to align a position of the entire container partition 21 with the lid partition 41. Accordingly, it is possible to reliably carry out welding by heat sealing of not only the container-inclined portion 5x and the lid-inclined portion 6x to each other but also the entire container partition 21 and the entire lid partition 41 to each other.

Moreover, because the electrode groups 3 are formed by using the cast grids, thicknesses of the electrode groups vary and the container partitions 21 are deformed when the electrode groups 3 are housed in the cell chambers 2S. However, with the guide portions 7 of the present embodiment, the deformation is resolved and it is possible to reliably carry out the welding by heat sealing. Similarly, because the electrode groups 3 are housed in the cell chambers 2S while pressed in the layered direction, the container partitions 21 are pressed by the electrode groups 3 and deformed. However, with the guide portions 7 of the present embodiment, the deformation is resolved and it is possible to reliably carry out the welding by heat sealing.

### <Other Variations of the Embodiment>

The present invention is not limited to the above embodiment.

For example, although the structure in which only the lid-inclined portion 6x formed at the lid partition 41 is provided with the guide portion 7 is shown in the above embodiment, in addition to this, guide portions 7 may be provided to lower end portions 41m and 41n of a lid partition 41 as well. If the guide portions 7 are provided to the flat portions 41m and 41n, lengths of the guide portions 7 need to be set such that the guide portions 7 do not interfere with a separator 8 of an electrode group 3.

Further, although the guide portion 7 is provided to the inclined portion 61 or 62 on the center side at the recessed portion 6 of the lid partition 41 in the above embodiment, a guide portion 7 may be provided to an inclined portion 61 or 62 on an opposite side from a center side at a recessed portion 6. Alternatively, guide portions 7 may be provided to both of two inclined portions 61 and 62 of a recessed portion 6.

Furthermore, although the protruding portion 5 is formed at the portion provided with the intercell connecting portion 311 in the above embodiment, in addition to this, a second protruding portion not provided with an intercell connecting portion 311 may be formed also at a portion sandwiched between paired unconnected straps, which are straps 31 of opposite polarities and not connected to each other, of electrode groups housed in adjacent cell chambers. Then, a guide portion 7 may be provided to an inclined portion of a second recessed portion corresponding to the second protruding portion.

Moreover, although the electrode plates forming the electrode groups in the above embodiment are formed by using the cast grids, expanded grids or punching grids may be used.

Further, although the lid 4 and the container 2 are welded to each other by heat sealing in the above embodiment, any method for joining can be employed, if the lid 4 and the container 2 are sealed. For example, resin may be provided between them to bond them.

Furthermore, the present invention is not limited to the above embodiment and can be changed in various ways.

## Claims

1. A sealed battery comprising:
a container, which is surrounded with container side walls and partitioned into a plurality of cell chambers with a container partition and in which an electrode group including a separator is housed in each of the cell chambers; and
a lid including a lid partition to be joined to the container partition,
wherein the container partition includes a container-inclined portion diagonally inclined at a higher position than upper ends of the container side walls,
the lid partition includes a lid-inclined portion diagonally inclined to conform to the container-inclined portion, and
a guide portion for aligning a position of the container-inclined portion with the lid-inclined portion is provided to the lid-inclined portion.

2. The sealed battery according to claim 1,
wherein the container partition has a protruding portion protruding to be higher than the upper ends of the container side walls,
the lid partition has a recessed portion recessed to conform to the protruding portion, and
an intercell connecting portion for connecting the electrode groups in the cell chambers adjacent to each other is provided to the protruding portion.

3. The sealed battery according to claim 2,
wherein the protruding portion includes side faces and the container-inclined portion is formed on one of the side faces that is located in vicinity of a center of the container partition, and
the recessed portion is defined between side faces and the lid-inclined portion is formed on one of the side faces that is located in vicinity of a center of the lid partition.

4. The sealed battery according to any one of claims 1 to 3,
wherein the guide portion has a pair of guide ribs protruding downward from opposite sides of the lid-inclined portion, and
the pair of guide ribs have guide faces inclined such that a clearance between the guide ribs gradually widens toward tip ends of the guide ribs.

5. The sealed battery according to claim 4, wherein the tip ends of the guide ribs are at higher positions than lower ends of lid side walls to be joined to the container side walls.

6. The sealed battery according to any one of claims 1 to 5, wherein electrode plates forming the electrode groups comprise cast grids.

7. The sealed battery according to any one of claims 1 to 6, wherein the electrode groups are pressed in a direction intersecting with the container side walls when the electrode groups are housed in the cell chambers.

## Patentansprüche

1. Versiegelte Batterie, die Folgendes umfasst:
einen Behälter, der von Behälterseitenwänden umgeben ist und mit einer Behältertrennwand in mehrere Zellkammern unterteilt ist, und wobei eine Elektrodengruppe, die einen Separator umfasst, in jeder der Zellkammern untergebracht ist; und
einen Deckel, der eine Deckeltrennwand umfasst und mit der Behältertrennwand zu verbinden ist,
wobei die Behältertrennwand einen geneigten Behälterabschnitt umfasst, der diagonal an einer höheren Position geneigt ist als obere Enden der Behälterseitenwände,
wobei die Deckeltrennwand einen geneigten Deckelabschnitt umfasst, der diagonal so geneigt ist, dass er dem geneigten Behälterabschnitt entspricht, und
wobei ein Führungsabschnitt zum Ausrichten einer Position des geneigten Behälterabschnitts auf den geneigten Deckelabschnitt an dem geneigten Deckelabschnitt angeordnet ist.

2. Versiegelte Batterie nach Anspruch 1,
wobei die Behältertrennwand einen hervorstehenden Abschnitt hat, der so hervorsteht, dass er höher ist als die oberen Enden der Behälterseitenwände,
wobei die Deckeltrennwand einen eingerückten Abschnitt hat, der so eingerückt ist, dass er dem hervorstehenden Abschnitt entspricht, und
wobei ein Interzellenverbindungsabschnitt zum Verbinden der Elektrodengruppen in den Zellkammern nebeneinander an dem hervorstehenden Abschnitt angeordnet ist.

3. Versiegelte Batterie nach Anspruch 2,
wobei der hervorstehende Abschnitt Seitenflächen umfasst, und der geneigte Behälterabschnitt an einer der Seitenflächen ausgebildet ist, die sich in der Nähe einer Mitte der Behältertrennwand befindet, und
wobei der eingerückte Abschnitt zwischen Seitenflächen definiert ist und der geneigte Deckelabschnitt an einer der Seitenflächen ausgebildet ist, die sich in der Nähe einer Mitte der Deckeltrennwand befindet.

4. Versiegelte Batterie nach einem der Ansprüche 1 bis 3, wobei der Führungsabschnitt ein Paar Führungsrippen hat, die von gegenüberliegenden Seiten des geneigten Deckelabschnitts nach unten hervorstehen, und
wobei das Paar Führungsrippen Führungsflächen aufweist, die so geneigt sind, dass ein Spielraum zwischen den Führungsrippen in Richtung der Spitzenenden der Führungsrippen allmählich breiter wird.

5. Versiegelte Batterie nach Anspruch 4, wobei sich die Spitzenenden der Führungsrippen auf höheren Positionen als untere Enden von Deckelseitenwänden befinden, die mit den Behälterseitenwänden zu verbinden sind.

6. Versiegelte Batterie nach einem der Ansprüche 1 bis 5, wobei Elektrodenplatten, welche die Elektrodengruppen bilden, Gussgitter umfassen.

7. Versiegelte Batterie nach einem der Ansprüche 1 bis 6, wobei die Elektrodengruppen in eine Richtung gedrückt werden, die sich mit den Behälterseitenwänden überschneidet, wenn die Elektrodengruppen in den Zellkammern untergebracht sind.

## Revendications

1. Batterie scellée comprenant :
un récipient, qui est entouré de parois latérales de récipient et divisé en une pluralité de chambres cellulaires avec une cloison de récipient et dans lequel un groupe d'électrodes comprenant un séparateur est logé dans chacune des chambres cellulaires; et
un couvercle comprenant une cloison de couvercle destinée à être reliée à la cloison de récipient, dans laquelle la cloison de récipient comprend une partie inclinée de récipient inclinée en diagonale à une position plus haute que les extrémités supérieures des parois latérales de récipient, la cloison de couvercle comprend une partie inclinée de couvercle inclinée en diagonale pour s'adapter à la partie inclinée de récipient, et
une partie de guidage pour aligner une position de la partie inclinée de récipient avec la partie inclinée de couvercle est prévue sur la partie inclinée de couvercle.

2. Batterie scellée selon la revendication 1,
dans laquelle la cloison de récipient comporte une partie saillante faisant saillie pour être plus haute que les extrémités supérieures des parois latérales de récipient, la cloison de couvercle comporte une partie évidée, évidée pour s'adapter à la partie saillante, et
une partie de connexion intercellulaire pour relier les groupes d'électrodes dans les chambres cellulaires adjacentes les unes aux autres est prévue sur la partie saillante.

3. Batterie scellée selon la revendication 2,
dans laquelle la partie saillante comprend des faces latérales et la partie inclinée de récipient est formée sur l'une des faces latérales qui est située au voisinage d'un centre de la cloison de récipient, et
la partie évidée est définie entre des faces latérales et la partie inclinée de couvercle est formée sur l'une des faces latérales qui est située au voisinage d'un centre de la cloison de couvercle.

4. Batterie scellée selon l'une quelconque des revendications 1 à 3,
dans laquelle la partie de guidage comporte une paire de nervures de guidage faisant saillie vers le bas à partir de côtés opposés de la partie inclinée de couvercle, et la paire de nervures de guidage présentent des faces de guidage inclinées de telle sorte qu'un espace libre entre les nervures de guidage s'élargit progressivement vers les extrémités de bout des nervures de guidage.

5. Batterie scellée selon la revendication 4, dans laquelle les extrémités de bout des nervures de guidage sont à des positions plus hautes que des extrémités inférieures de parois latérales de couvercle devant être reliées aux parois latérales de récipient.

6. Batterie scellée selon l'une quelconque des revendications 1 à 5, dans laquelle des plaques d'électrodes formant les groupes d'électrodes comprennent des grilles coulées.

7. Batterie scellée selon l'une quelconque des revendications 1 à 6, dans laquelle les groupes d'électrodes sont pressés dans une direction croisant les parois latérales de récipient lorsque les groupes d'électrodes sont logés dans les chambres cellulaires.
